# EUROPEAN PATENT APPLICATION

(11) **EP 4 438 392 A1**
(43) Date of publication of application: **02.10.2024**
(21) Application number: 24164335.2
(22) Date of filing: 19.03.2024
(51) Int. Cl.: B60L 53/65, B60L 53/14

(54) **CHARGING CONTROL METHOD FOR VEHICLE PLUG AND CHARGE**

(30) Priority: 27.03.2023 CN 202310311922
(71) Applicant: Nio Technology (Anhui) Co., Ltd, Hefei City, Anhui 230601 (CN)
(72) Inventor: ZHAO, Liang, Hefei City, Anhui, 230601 (CN)
(74) Representative: Vossius & Partner Patentanwälte Rechtsanwälte mbB

(57) **Abstract**

The disclosure relates to the field of vehicle charging technologies, and specifically provides a charging control method for vehicle plug and charge, which is intended to solve the problem in the prior art that when electric vehicle models exported from China are charged in European regions, a customer needs to apply for and top up a card at a charging operator, and at different charging stations, the customer needs to apply for cards repeatedly, making charging inconvenient. To this end, the charging control method for vehicle plug and charge of the disclosure includes: determining that a vehicle has been physically connected to a charging pile; determining whether bidirectional authentication between the vehicle and the charging pile succeeds; if the authentication succeeds, sending authorization information to the charging pile by a charging operator of the charging pile; and enabling a charging function by the charging pile upon receiving the authorization information. According to the disclosure, the function that enables automatic bidirectional authentication between the vehicle and the charging pile is established, such that when the authentication succeeds, the charging pile enables the charging function, without the need to operate by means of card swiping or code scanning on a mobile phone APP, thereby simplifying the charging process and improving the user experience.

## Description

### Technical Field

The disclosure relates to the field of vehicle charging technologies, and specifically provides a charging control method for vehicle plug and charge.

### Background Art

Electric vehicle plug and charge is widely applied in China. However, exported models involve different information security requirements and also different communication modes between vehicles and charging piles. A plug and charge function is developing rapidly in European standard charging regions, and an increasingly growing number of users tend to use this function.

In the prior art, when electric vehicle models exported from China are charged in European regions, a customer needs to apply for and top up a card at a charging operator. At different charging stations, the customer needs to apply for cards repeatedly, making charging inconvenient and failing to implement the plug and charge function, thus resulting in a poor experience.

In view of this, there is a need for the disclosure to provide a novel charging control method for vehicle plug and charge to solve the above technical problem.

### Summary

The disclosure is intended to solve the above technical problem, i.e., the problem in the prior art that when electric vehicle models exported from China are charged in European regions, a customer needs to apply for and top up a card at a charging operator, and at different charging stations, the customer needs to apply for cards repeatedly, making charging inconvenient and failing to implement the plug and charge function, thus resulting in a poor experience.

In view of this, the disclosure provides a charging control method for vehicle plug and charge, the charging control method including:
determining that a vehicle has been physically connected to a charging pile;
determining whether bidirectional authentication between the vehicle and the charging pile succeeds;
if the authentication succeeds, sending authorization information to the charging pile by a charging operator of the charging pile; and
enabling a charging function by the charging pile upon receiving the authorization information.

With the above technical solution, automatic bidirectional authentication is enabled between the vehicle and the charging pile, such that when the authentication succeeds, the charging pile can automatically enable the charging function, without the need to operate by means of card swiping or code scanning on a mobile phone APP, thereby simplifying the charging process and improving the user experience.

In a specific implementation of the charging control method for vehicle plug and charge, a communication between the charging pile and the vehicle is a power line carrier (PLC) communication with TLS encryption.

With the above technical solution, the communication between the charging pile and the vehicle is the power line carrier (PLC) communication with the TLS encryption, which is highly secure.

In a specific implementation of the charging control method for vehicle plug and charge, the step of "determining whether bidirectional authentication between the vehicle and the charging pile succeeds" further includes: sending a vehicle-end authentication request to the charging pile by the vehicle, where the vehicle-end authentication request carries vehicle digital certificate information;
sending a pile-end authentication request to the vehicle by the charging pile, where the pile-end authentication request carries charging pile digital certificate information;
verifying, by the charging pile and upon receiving the vehicle-end authentication request, whether the vehicle digital certificate information is the same as pre-stored vehicle digital certificate information;
verifying, by the vehicle and upon receiving the pile-end authentication request, whether the charging pile digital certificate information is the same as pre-stored charging pile digital certificate information; and
depending on whether the vehicle digital certificate information is the same as the pre-stored vehicle digital certificate information and whether the charging pile digital certificate information is the same as the pre-stored charging pile digital certificate information, selectively determining that the authentication succeeds or that the authentication fails.

In a specific implementation of the charging control method for vehicle plug and charge, the step of "depending on whether the vehicle digital certificate information is the same as the pre-stored vehicle digital certificate information and whether the charging pile digital certificate information is the same as the pre-stored charging pile digital certificate information, selectively determining that the authentication succeeds or that the authentication fails" specifically includes:
if the vehicle digital certificate information is the same as the pre-stored vehicle digital certificate information and the charging pile digital certificate information is the same as the pre-stored charging pile digital certificate information, determining that the authentication succeeds; and/or
if the vehicle digital certificate information is not the same as the pre-stored vehicle digital certificate information or the charging pile digital certificate information is not the same as the pre-stored charging pile digital certificate information, determining that the authentication fails.

With the above technical solution, the disclosure allows the function of the bidirectional authentication between the vehicle and the charging pile to be implemented by determining whether the vehicle digital certificate information is the same as the pre-stored vehicle digital certificate information and whether the charging pile digital certificate information is the same as the pre-stored charging pile digital certificate information. The charging pile automatically enables the charging function only when the bidirectional authentication succeeds, such that not only is the plug and charge function implemented, but also the bidirectional authentication increases the level of difficulty in authentication, thereby improving the security.

In a specific implementation of the charging control method for vehicle plug and charge, the vehicle digital certificate information and the charging pile digital certificate information each include signed filing certificate information capable of proving authenticity of the charging operator.

With the above technical solution, the presence of the signed filing certificate information ensures the authenticity and legitimacy of the charging operator and thus prevents an illegitimate operator from disrupting the charging market and exposing user information, so that the confidentiality of the user information is improved.

In a specific implementation of the charging control method for vehicle plug and charge, the signed filing certificate information is generated by:
sending, by the charging operator and to a root certificate management platform, a filing certificate that carries user ID information and charging pile ID information;
signing, by the root certificate management platform, the received filing certificate to obtain a signed filing certificate; and
receiving, by the charging operator, the signed filing certificate sent by the root certificate management platform, so as to obtain the signed filing certificate information.

With the above technical solution, the signed filing certificate information is generated by the root certificate management platform signing the filing certificate, which is highly secure and difficult to crack.

In a specific implementation of the charging control method for vehicle plug and charge, the vehicle digital certificate information is generated by:
generating, by the charging operator, a first credential certificate from the user ID information and the charging pile ID information, and writing the signed filing certificate information into the first credential certificate; and
sending the first credential certificate to an Internet of vehicles cloud platform by the charging operator, and writing, by the Internet of vehicles cloud platform, the first credential certificate into the vehicle, so as to obtain the vehicle digital certificate information.

With the above technical solution, the vehicle digital certificate information includes the user ID information, the charging pile ID information, and the signed filing certificate information, which can ensure the accuracy and security of authentication during the authentication.

In a specific implementation of the charging control method for vehicle plug and charge, the charging pile digital certificate information is generated by:
generating, by the charging operator, a second credential certificate from the user ID information and the charging pile ID information, and writing the signed filing certificate information into the second credential certificate; and
sending, by the charging operator, the second credential certificate to the charging pile for storage, so as to obtain the charging pile digital certificate information.

With the above technical solution, the charging pile digital certificate information includes the user ID information, the charging pile ID information, and the signed filing certificate information, which can ensure the accuracy and security of authentication during the authentication.

In a specific implementation of the charging control method for vehicle plug and charge, the user ID information includes a charging account opened at the charging operator, user identity card information, information of binding payment, a license plate number of the vehicle, and a driving license; and/or
the charging pile ID information includes a serial number of the charging pile, a brand of the charging pile, and the charging operator of the charging pile.

In a specific implementation of the charging control method for vehicle plug and charge, the charging pile has a display screen mounted thereon, and the charging control method further includes:
when a determination result indicating an authentication failure is received, performing recording once;
accumulating a number of authentication failures; and
when the accumulated number is greater than or equal to a preset number, controlling the display screen to display charging disabled.

With the above technical solution, the disclosure allows information of charging disabled not to be displayed until the accumulated number of authentication failures reaches the preset number, that is, the number of times of authentication is increased, avoiding a problem that no more authentication can be continued after one authentication failure due to factors such as an unstable signal, thereby making it more flexible and convenient to use.

In a specific implementation of the charging control method for vehicle plug and charge, the charging control method further includes:
when the vehicle switches from being physically connected to the charging pile to being physically separated from the charging pile, controlling the charging operator to calculate an electricity fee and automatically deduct the electricity fee from the charging account.

With the above technical solution, after the charging is completed, the electricity fee is deducted directly from the charging account, without the need for a user to pay by means of card swiping or code scanning on a mobile phone, thereby simplifying the payment process and making it more convenient to use.

The disclosure further provides another charging control method for vehicle plug and charge, the charging control method including:
determining, by a vehicle, that the vehicle has been physically connected to a charging pile; and
determining, by the vehicle, whether bidirectional authentication between the vehicle and the charging pile succeeds, and if the authentication succeeds, sending authorization information to the charging pile by a charging operator of the charging pile, so that the charging pile enables a charging function upon receiving the authorization information.

In a specific implementation of the charging control method for vehicle plug and charge, the step of "determining, by the vehicle, whether bidirectional authentication between the vehicle and the charging pile succeeds" further includes:
sending, by the vehicle and to the charging pile, a vehicle-end authentication request that carries vehicle digital certificate information, so that the charging pile verifies, upon receiving the vehicle-end authentication request, whether the vehicle digital certificate information is the same as pre-stored vehicle digital certificate information;
verifying, by the vehicle and upon receiving a pile-end authentication request that carries charging pile digital certificate information and is sent to the vehicle by the charging pile, whether the charging pile digital certificate information is the same as pre-stored charging pile digital certificate information; and
depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails.

In a specific implementation of the charging control method for vehicle plug and charge, the step of "depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails" specifically includes:
if the vehicle digital certificate information is the same as the pre-stored vehicle digital certificate information and the charging pile digital certificate information is the same as the pre-stored charging pile digital certificate information, determining, by the vehicle, that the authentication succeeds; and/or
if the vehicle digital certificate information is not the same as the pre-stored vehicle digital certificate information or the charging pile digital certificate information is not the same as the pre-stored charging pile digital certificate information, determining, by the vehicle, that the authentication fails.

The disclosure further provides yet another charging control method for vehicle plug and charge, the charging control method including:
determining, by a charging pile, that the charging pile has been physically connected to a vehicle;
determining, by the charging pile, whether bidirectional authentication between the charging pile and the vehicle succeeds;
if the authentication succeeds, sending authorization information to the charging pile by a charging operator of the charging pile; and
enabling a charging function by the charging pile upon receiving the authorization information.

In a specific implementation of the charging control method for vehicle plug and charge, the step of "determining, by the charging pile, whether bidirectional authentication between the charging pile and the vehicle succeeds" further includes:
sending, by the charging pile and to the vehicle, a pile-end authentication request that carries charging pile digital certificate information, so that the vehicle verifies, upon receiving the pile-end authentication request, whether the charging pile digital certificate information is the same as pre-stored charging pile digital certificate information;
verifying, by the charging pile and upon receiving a vehicle-end authentication request that carries vehicle digital certificate information and is sent to the charging pile by the vehicle, whether the vehicle digital certificate information is the same as pre-stored vehicle digital certificate information; and
depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails.

In a specific implementation of the charging control method for vehicle plug and charge, the step of "depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails" specifically includes:
if the vehicle digital certificate information is the same as the pre-stored vehicle digital certificate information and the charging pile digital certificate information is the same as the pre-stored charging pile digital certificate information, determining, by the charging pile, that the authentication succeeds; and/or
if the vehicle digital certificate information is not the same as the pre-stored vehicle digital certificate information or the charging pile digital certificate information is not the same as the pre-stored charging pile digital certificate information, determining, by the charging pile, that the authentication fails.

The disclosure further provides a charging control method for vehicle plug and charge, the charging control method including:
determining, by a charging operator, that a charging pile has been physically connected to vehicle;
determining, by the charging operator, whether bidirectional authentication between the charging pile and the vehicle succeeds; and
if the authentication succeeds, sending authorization information to the charging pile by the charging operator, so that the charging pile enables a charging function upon receiving the authorization information.

In a specific implementation of the charging control method for vehicle plug and charge, the step of "determining, by the charging operator, whether bidirectional authentication between the charging pile and the vehicle succeeds" further includes:
verifying, by the charging operator, whether a pile-end authentication request that carries charging pile digital certificate information and is sent to the vehicle by the charging pile is the same as pre-stored charging pile digital certificate information;
verifying, by the charging operator, whether a vehicle-end authentication request that carries vehicle digital certificate information and is sent to the charging pile by the vehicle is the same as pre-stored vehicle digital certificate information;
if the vehicle digital certificate information is the same as the pre-stored vehicle digital certificate information and the charging pile digital certificate information is the same as the pre-stored charging pile digital certificate information, determining, by the charging operator, that the authentication succeeds; or
if the vehicle digital certificate information is not the same as the pre-stored vehicle digital certificate information or the charging pile digital certificate information is not the same as the pre-stored charging pile digital certificate information, determining, by the charging operator, that the authentication fails.

The disclosure further provides a vehicle including a controller, where the controller is configured to be able to perform the charging control method for vehicle plug and charge according to any one of the above technical solutions.

The disclosure further provides a charging pile including a controller, where the controller is configured to be able to perform the charging control method for vehicle plug and charge according to any one of the above technical solutions.

The disclosure further provides a storage medium having computer executable instructions stored therein, where the computer executable instructions implement, when executed by a processor, the charging control method for vehicle plug and charge according to any one of the above technical solutions.

### Brief Description of the Drawings

Preferred implementations of the disclosure are described below with reference to the accompanying drawings, in which:
FIG. 1 is a flowchart of main steps of a charging control method for vehicle plug and charge according to the disclosure; and
FIG. 2 is a flowchart of detailed steps of a charging control method for vehicle plug and charge according to the disclosure.

### Detailed Description of Embodiments

Preferred implementations of the disclosure are described below with reference to the accompanying drawings. It should be understood by those skilled in the art that these implementations are only for explaining the technical principle of the disclosure, and are not intended to limit the scope of protection of the disclosure. Those skilled in the art can make adjustments to the implementations according to requirements, so as to adapt to specific application scenarios.

It should be noted that, in the description of the disclosure, the terms that indicate the direction or positional relationship, such as "upper" and "lower", are based on the direction or positional relationship shown in the accompanying drawings, which is merely for ease of description instead of indicating or implying that the related device or element must have a particular orientation and be constructed and operated in a particular orientation, and therefore, should not be construed as limiting the disclosure. Moreover, the ordinal numbers such as "first" and "second" are merely used for the illustrative purpose, and should not be construed as indicating or implying relative importance.

In addition, it should also be noted that, in the description of the disclosure, the terms "mount" and "connect" should be interpreted in a broad sense unless explicitly defined and limited otherwise. For example, the terms may mean a fixed connection, a detachable connection, or an integral connection; may be a mechanical connection or an electrical connection; and may be a direct connection, or an indirect connection by means of an intermediate medium. For those skilled in the art, the specific meanings of the foregoing terms in the disclosure can be interpreted according to a specific situation.

In the prior art, when electric vehicle models exported from China are charged in European regions, a customer needs to apply for and top up a card at a charging operator. At different charging stations, the customer needs to apply for cards repeatedly, making charging inconvenient and failing to implement the plug and charge function, thus resulting in a poor experience.

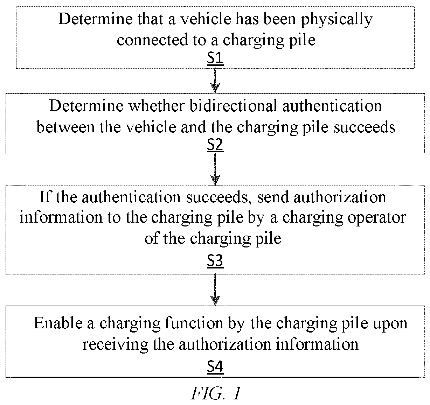

To solve the above technical problem, referring to FIG. 1, the disclosure provides a charging control method for vehicle plug and charge. The charging control method includes:
S 1, determining that a vehicle has been physically connected to a charging pile;
S2, determining whether bidirectional authentication between the vehicle and the charging pile succeeds;
S3, if the authentication succeeds, sending authorization information to the charging pile by a charging operator of the charging pile; and
S4, enabling a charging function by the charging pile upon receiving the authorization information.

A communication between the charging pile and the vehicle is a power line carrier (PLC) communication with TLS encryption.

The charging control method further includes: if the authentication fails, refraining from sending authorization information to the charging pile by the charging operator of the charging pile, in which case the charging pile will not enable the charging function.

Specifically, the vehicle being physically connected to the charging pile means that a charging gun on the charging pile is plugged into the vehicle, the vehicle is an electric vehicle, and the charging pile is a European standard charging pile. The vehicle has an electric vehicle communication controller (EVCC) mounted therein, the charging pile has a pile-end communication controller mounted therein, and the power line carrier (PLC) communication with TLS encryption is used between the electric vehicle communication controller and the pile-end communication controller. The charging pile can perform remote communication with the charging operator, and the charging operator can monitor the charging pile to avoid situations such as a failure to repair the charging pile in a timely manner when the charging pile does not function properly.

In this embodiment, automatic bidirectional authentication is enabled between the vehicle and the charging pile, such that when the authentication succeeds, the charging pile can automatically enable the charging function, without the need to operate by means of card swiping or code scanning on a mobile phone APP, thereby simplifying the charging process, implementing the function of exported-vehicle plug and charge in European standard regions, and improving the user experience. Moreover, the communication between the charging pile and the vehicle is the power line carrier (PLC) communication with TLS encryption, which is highly secure.

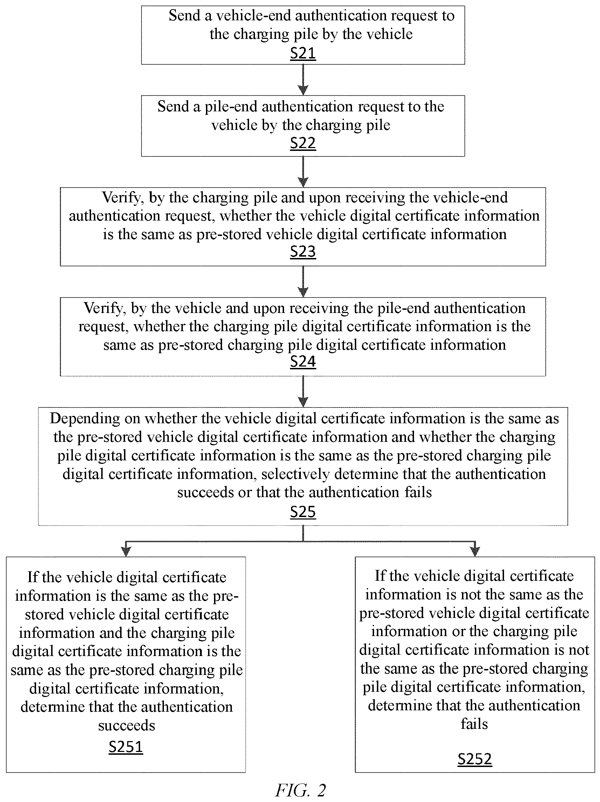

Referring to FIG. 2, step S2 of "determining whether bidirectional authentication between the vehicle and the charging pile succeeds" further includes:
S21, sending a vehicle-end authentication request to the charging pile by the vehicle, where the vehicle-end authentication request carries vehicle digital certificate information;
S22, sending a pile-end authentication request to the vehicle by the charging pile, where the pile-end authentication request carries charging pile digital certificate information;
S23, verifying, by the charging pile and upon receiving the vehicle-end authentication request, whether the vehicle digital certificate information is the same as pre-stored vehicle digital certificate information;
S24, verifying, by the vehicle and upon receiving the pile-end authentication request, whether the charging pile digital certificate information is the same as pre-stored charging pile digital certificate information; and
S25, depending on whether the vehicle digital certificate information is the same as the pre-stored vehicle digital certificate information and whether the charging pile digital certificate information is the same as the pre-stored charging pile digital certificate information, selectively determining that the authentication succeeds or that the authentication fails.

It should be noted that an execution order of step S21 and step S22 is not limited in the disclosure. Step S21 may be executed prior to step S22, or step S21 may be executed after step S22, or step S21 and step S22 may be executed simultaneously. Step S23 is executed after step S21, and step S24 is executed after step S22. An Internet of Vehicles cloud platform can perform remote communication with the vehicle and monitor the condition of the vehicle to discover a problem in a timely manner.

In this embodiment, the vehicle digital certificate information and the charging pile digital certificate information each include signed filing certificate information capable of proving authenticity of the charging operator.

Specifically, the signed filing certificate information is generated by:
sending, by the charging operator and to a root certificate management platform, a filing certificate that carries user ID information and charging pile ID information;
signing, by the root certificate management platform, the received filing certificate to obtain a signed filing certificate; and
receiving, by the charging operator, the signed filing certificate sent by the root certificate management platform, so as to obtain the signed filing certificate information.

The presence of the signed filing certificate information ensures the authenticity and legitimacy of the charging operator and thus prevents an illegitimate operator from disrupting the charging market and exposing user information, so that the confidentiality of the user information is improved.

Specifically, the vehicle digital certificate information is generated by:
generating, by the charging operator, a first credential certificate from the recorded user ID information and charging pile ID information, and writing the signed filing certificate information into the first credential certificate; and
sending the first credential certificate to an Internet of vehicles cloud platform by the charging operator, and writing, by the Internet of vehicles cloud platform, the first credential certificate into the vehicle, so as to obtain the vehicle digital certificate information. The vehicle has a vehicle-end memory mounted thereon, which stores the first credential certificate for use by the vehicle to send the authentication request to the charging pile. The vehicle digital certificate information includes the user ID information, the charging pile ID information, and the signed filing certificate information, which can ensure the accuracy and security of authentication during the authentication.

In addition, the charging pile digital certificate information is generated by:
generating, by the charging operator, a second credential certificate from the user ID information and the charging pile ID information, and writing the signed filing certificate information into the second credential certificate; and sending, by the charging operator, the second credential certificate to the charging pile for storage, so as to obtain the charging pile digital certificate information. The charging pile has a pile-end memory mounted thereon, which stores the second credential certificate for use by the charging pile to send the authentication request to the vehicle. The charging pile digital certificate information includes the user ID information, the charging pile ID information, and the signed filing certificate information, which can ensure the accuracy and security of authentication during the authentication.

It should be noted that the user ID information may include a charging account opened at the charging operator, user identity card information, information of binding payment, a license plate number of the vehicle, and a driving license. The charging pile ID information may include a serial number of the charging pile, a brand of the charging pile, and the charging operator of the charging pile. However, the contents of the user ID information and the charging pile ID information already described above are not limited in the disclosure, and other information that can prove a user identity and a charging pile identity may also be included, which is designed flexibly according to actual requirements.

Still referring to FIG. 2, step S25 of "depending on whether the vehicle digital certificate information is the same as the pre-stored vehicle digital certificate information and whether the charging pile digital certificate information is the same as the pre-stored charging pile digital certificate information, selectively determining that the authentication succeeds or that the authentication fails" specifically includes:
S251, if the vehicle digital certificate information is the same as the pre-stored vehicle digital certificate information and the charging pile digital certificate information is the same as the pre-stored charging pile digital certificate information, determining that the authentication succeeds; or
S252, if the vehicle digital certificate information is not the same as the pre-stored vehicle digital certificate information or the charging pile digital certificate information is not the same as the pre-stored charging pile digital certificate information, determining that the authentication fails.

Specifically, if the vehicle digital certificate information is the same as the pre-stored vehicle digital certificate information and the charging pile digital certificate information is not the same as the pre-stored charging pile digital certificate information, it is also determined that the authentication fails; and
if the vehicle digital certificate information is not the same as the pre-stored vehicle digital certificate information and the charging pile digital certificate information is the same as the pre-stored charging pile digital certificate information, it is also determined that the authentication fails.

The disclosure allows the function of the bidirectional authentication between the vehicle and the charging pile to be implemented by determining whether the vehicle digital certificate information is the same as the pre-stored vehicle digital certificate information and whether the charging pile digital certificate information is the same as the pre-stored charging pile digital certificate information. The charging pile automatically enables the charging function only when the bidirectional authentication succeeds, such that not only is the plug and charge function implemented, but also the bidirectional authentication increases the level of difficulty in authentication, thereby improving the security.

In addition, the charging pile has a display screen mounted thereon, and the charging control method further includes:
when a determination result indicating an authentication failure is received, performing recording once;
accumulating a number of authentication failures; and
when the accumulated number is greater than or equal to a preset number, controlling the display screen to display charging disabled.

Specifically, the preset number is at least three, which may be three, four, or five. The specific value of the preset number is not limited in the present disclosure, and the preset number is designed according to actual needs.

The disclosure allows information of charging disabled not to be displayed until the accumulated number of authentication failures reaches the preset number, that is, the number of times of authentication is increased, avoiding a problem that authentication cannot be continued after one authentication failure due to factors such as an unstable signal, thereby making it more flexible and convenient to use.

Furthermore, the charging control method further includes:
when the vehicle switches from being physically connected to the charging pile to being physically separated from the charging pile, controlling the charging operator to calculate an electricity fee and automatically deduct the electricity fee from the charging account. Physically separated means that the charging gun is unplugged from the vehicle by the user. When the charging account balance is insufficient, the account may be topped up, which makes plug and charge possible at each time of charging. After the charging is completed, the electricity fee is deducted directly from the charging account, without the need for a user to pay by means of card swiping or code scanning on a mobile phone, thereby simplifying the payment process and making it more convenient to use.

With the above implementations and various expanded embodiments, the disclosure can implement a function of vehicle plug and charge in the European standard regions, without requiring repeated application for a card or code-scanning payment, thereby making the charging more convenient and the use experience better.

The disclosure further provides another charging control method for vehicle plug and charge, the charging control method including:
determining, by a vehicle, that the vehicle has been physically connected to a charging pile; and
determining, by the vehicle, whether bidirectional authentication between the vehicle and the charging pile succeeds, and if the authentication succeeds, sending authorization information to the charging pile by a charging operator of the charging pile, so that the charging pile enables a charging function upon receiving the authorization information.

In one embodiment, the step of "determining, by the vehicle, whether bidirectional authentication between the vehicle and the charging pile succeeds" further includes:
sending, by the vehicle and to the charging pile, a vehicle-end authentication request that carries vehicle digital certificate information, so that the charging pile verifies, upon receiving the vehicle-end authentication request, whether the vehicle digital certificate information is the same as pre-stored vehicle digital certificate information;
verifying, by the vehicle and upon receiving a pile-end authentication request that carries charging pile digital certificate information and is sent to the vehicle by the charging pile, whether the charging pile digital certificate information is the same as pre-stored charging pile digital certificate information; and
depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails.

In one embodiment, the step of "depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails" specifically includes:
if the vehicle digital certificate information is the same as the pre-stored vehicle digital certificate information and the charging pile digital certificate information is the same as the pre-stored charging pile digital certificate information, determining, by the vehicle, that the authentication succeeds; or
if the vehicle digital certificate information is not the same as the pre-stored vehicle digital certificate information or the charging pile digital certificate information is not the same as the pre-stored charging pile digital certificate information, determining, by the vehicle, that the authentication fails.

The disclosure further provides yet another charging control method for vehicle plug and charge, the charging control method including:
determining, by a charging pile, that the charging pile has been physically connected to a vehicle;
determining, by the charging pile, whether bidirectional authentication between the charging pile and the vehicle succeeds;
if the authentication succeeds, sending authorization information to the charging pile by a charging operator of the charging pile; and
enabling a charging function by the charging pile upon receiving the authorization information.

In one embodiment, the step of "determining, by the charging pile, whether bidirectional authentication between the charging pile and the vehicle succeeds" further includes:
sending, by the charging pile and to the vehicle, a pile-end authentication request that carries charging pile digital certificate information, so that the vehicle verifies, upon receiving the pile-end authentication request, whether the charging pile digital certificate information is the same as pre-stored charging pile digital certificate information;
verifying, by the charging pile and upon receiving a vehicle-end authentication request that carries vehicle digital certificate information and is sent to the charging pile by the vehicle, whether the vehicle digital certificate information is the same as pre-stored vehicle digital certificate information; and
depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails.

In one embodiment, the step of "depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails" specifically includes:
if the vehicle digital certificate information is the same as the pre-stored vehicle digital certificate information and the charging pile digital certificate information is the same as the pre-stored charging pile digital certificate information, determining, by the charging pile, that the authentication succeeds; or
if the vehicle digital certificate information is not the same as the pre-stored vehicle digital certificate information or the charging pile digital certificate information is not the same as the pre-stored charging pile digital certificate information, determining, by the charging pile, that the authentication fails.

The disclosure further provides a charging control method for vehicle plug and charge, the charging control method including:
determining, by a charging operator, that a charging pile has been physically connected to vehicle;
determining, by the charging operator, whether bidirectional authentication between the charging pile and the vehicle succeeds; and
if the authentication succeeds, sending authorization information to the charging pile by the charging operator, so that the charging pile enables a charging function upon receiving the authorization information.

In one embodiment, the step of "determining, by the charging operator, whether bidirectional authentication between the charging pile and the vehicle succeeds" further includes:
verifying, by the charging operator, whether a pile-end authentication request that carries charging pile digital certificate information and is sent to the vehicle by the charging pile is the same as pre-stored charging pile digital certificate information;
verifying, by the charging operator, whether a vehicle-end authentication request that carries vehicle digital certificate information and is sent to the charging pile by the vehicle is the same as pre-stored vehicle digital certificate information;
if the vehicle digital certificate information is the same as the pre-stored vehicle digital certificate information and the charging pile digital certificate information is the same as the pre-stored charging pile digital certificate information, determining, by the charging operator, that the authentication succeeds; or
if the vehicle digital certificate information is not the same as the pre-stored vehicle digital certificate information or the charging pile digital certificate information is not the same as the pre-stored charging pile digital certificate information, determining, by the charging operator, that the authentication fails.

In addition, the disclosure further provides a vehicle including a controller, where the controller is configured to be able to perform the charging control method for vehicle plug and charge as described in any one of the above technical solutions.

In addition, the disclosure further provides a charging pile including a controller, where the controller is configured to be able to perform the charging control method for vehicle plug and charge as described in any one of the above technical solutions.

In addition, the disclosure further provides a storage medium having computer executable instructions stored therein, where the computer executable instructions implement, when executed by a processor, the charging control method for vehicle plug and charge as described in any one of the above technical solutions.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A charging control method for vehicle plug and charge, the charging control method comprising:
determining, by a vehicle, that the vehicle has been physically connected to a charging pile; and
determining, by the vehicle, whether bidirectional authentication between the vehicle and the charging pile succeeds, and if the authentication succeeds, determining, by the vehicle, whether the charging pile has received authorization information sent by a charging operator of the charging pile, so that the charging pile enables a charging function upon receiving the authorization information.

2. The charging control method for vehicle plug and charge according to claim 1, wherein the step of "determining, by the vehicle, whether bidirectional authentication between the vehicle and the charging pile succeeds" further comprises:
sending, by the vehicle and to the charging pile, a vehicle-end authentication request that carries vehicle digital certificate information, so that the charging pile verifies, upon receiving the vehicle-end authentication request, whether the vehicle digital certificate information is the same as pre-stored vehicle digital certificate information;
verifying, by the vehicle and upon receiving a pile-end authentication request that carries charging pile digital certificate information and is sent to the vehicle by the charging pile, whether the charging pile digital certificate information is the same as pre-stored charging pile digital certificate information; and
depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails.

3. The charging control method for vehicle plug and charge according to claim 2, wherein the step of "depending on whether the vehicle digital certificate information is the same as the pre-stored vehicle digital certificate information and whether the charging pile digital certificate information is the same as the pre-stored charging pile digital certificate information, selectively determining, by the vehicle, that the authentication succeeds or that the authentication fails" specifically comprises:
if the vehicle digital certificate information is the same as the pre-stored vehicle digital certificate information and the charging pile digital certificate information is the same as the pre-stored charging pile digital certificate information, determining, by the vehicle, that the authentication succeeds; and/or
if the vehicle digital certificate information is not the same as the pre-stored vehicle digital certificate information or the charging pile digital certificate information is not the same as the pre-stored charging pile digital certificate information, determining, by the vehicle, that the authentication fails.

4. The charging control method for vehicle plug and charge according to claim 2 or 3, wherein the vehicle digital certificate information and the charging pile digital certificate information each comprise signed filing certificate information capable of proving authenticity of the charging operator.

5. The charging control method for vehicle plug and charge according to claim 4, wherein the signed filing certificate information is generated by:
sending, by the charging operator and to a root certificate management platform, a filing certificate that carries user ID information and charging pile ID information;
signing, by the root certificate management platform, the received filing certificate to obtain a signed filing certificate; and
receiving, by the charging operator, the signed filing certificate sent by the root certificate management platform, so as to obtain the signed filing certificate information.

6. The charging control method for vehicle plug and charge according to claim 4 or 5, wherein the vehicle digital certificate information is generated by:
generating, by the charging operator, a first credential certificate from the recorded user ID information and charging pile ID information, and writing the signed filing certificate information into the first credential certificate; and
sending the first credential certificate to an Internet of vehicles cloud platform by the charging operator, and writing, by the Internet of vehicles cloud platform, the first credential certificate into the vehicle, so as to obtain the vehicle digital certificate information; and/or
the charging pile digital certificate information is generated by:
generating, by the charging operator, a second credential certificate from the user ID information and the charging pile ID information, and writing the signed filing certificate information into the second credential certificate; and
sending, by the charging operator, the second credential certificate to the charging pile for storage, so as to obtain the charging pile digital certificate information.

7. The charging control method for vehicle plug and charge according to any one of claims 1 to 6, wherein the user ID information comprises at least two of a charging account opened at the charging operator, user identity card information, information of binding payment, a license plate number of the vehicle, and a driving license;
or
the charging pile ID information comprises a serial number of the charging pile, a brand of the charging pile, and the charging operator of the charging pile.

8. A charging control method for vehicle plug and charge, the charging control method comprising:
determining, by a charging pile, that the charging pile has been physically connected to a vehicle;
determining, by the charging pile, whether bidirectional authentication between the charging pile and the vehicle succeeds;
if the authentication succeeds, receiving, by the charging pile, authorization information sent by a charging operator of the charging pile; and
enabling a charging function by the charging pile upon receiving the authorization information.

9. The charging control method for vehicle plug and charge according to claim 8, wherein the step of "determining, by the charging pile, whether bidirectional authentication between the charging pile and the vehicle succeeds" further comprises:
sending, by the charging pile and to the vehicle, a pile-end authentication request that carries charging pile digital certificate information, so that the vehicle verifies, upon receiving the pile-end authentication request, whether the charging pile digital certificate information is the same as pre-stored charging pile digital certificate information;
verifying, by the charging pile and upon receiving a vehicle-end authentication request that carries vehicle digital certificate information and is sent to the charging pile by the vehicle, whether the vehicle digital certificate information is the same as pre-stored vehicle digital certificate information; and
depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails.

10. The charging control method for vehicle plug and charge according to claim 9, wherein the step of "depending on whether the vehicle digital certificate information is the same as the pre-stored vehicle digital certificate information and whether the charging pile digital certificate information is the same as the pre-stored charging pile digital certificate information, selectively determining, by the charging pile, that the authentication succeeds or that the authentication fails" specifically comprises:
if the vehicle digital certificate information is the same as the pre-stored vehicle digital certificate information and the charging pile digital certificate information is the same as the pre-stored charging pile digital certificate information, determining, by the charging pile, that the authentication succeeds; and/or
if the vehicle digital certificate information is not the same as the pre-stored vehicle digital certificate information or the charging pile digital certificate information is not the same as the pre-stored charging pile digital certificate information, determining, by the charging pile, that the authentication fails.

11. A charging control method for vehicle plug and charge, the charging control method comprising:
determining, by a charging operator, that a charging pile has been physically connected to vehicle;
determining, by the charging operator, whether bidirectional authentication between the charging pile and the vehicle succeeds; and
if the authentication succeeds, sending authorization information to the charging pile by the charging operator, so that the charging pile enables a charging function upon receiving the authorization information.

12. The charging control method for vehicle plug and charge according to claim 11, wherein the step of "determining, by the charging operator, whether bidirectional authentication between the charging pile and the vehicle succeeds" further comprises:
verifying, by the charging operator, whether a pile-end authentication request that carries charging pile digital certificate information and is sent to the vehicle by the charging pile is the same as pre-stored charging pile digital certificate information;
verifying, by the charging operator, whether a vehicle-end authentication request that carries vehicle digital certificate information and is sent to the charging pile by the vehicle is the same as pre-stored vehicle digital certificate information;
if the vehicle digital certificate information is the same as the pre-stored vehicle digital certificate information and the charging pile digital certificate information is the same as the pre-stored charging pile digital certificate information, determining, by the charging operator, that the authentication succeeds; or
if the vehicle digital certificate information is not the same as the pre-stored vehicle digital certificate information or the charging pile digital certificate information is not the same as the pre-stored charging pile digital certificate information, determining, by the charging operator, that the authentication fails.

13. A vehicle, comprising a controller, wherein the controller is configured to be able to perform the charging control method for vehicle plug and charge according to any one of claims 1 to 7.

14. A charging pile, comprising a controller, wherein the controller is configured to be able to perform the charging control method for vehicle plug and charge according to any one of claims 8 to 10.

15. A storage medium, having computer executable instructions stored therein, wherein the computer executable instructions implement, when executed by a processor, the charging control method for vehicle plug and charge according to any one of claims 1 to 12.
